# EUROPÄISCHE PATENTANMELDUNG

(11) **EP 3 926 120 A1**
(43) Veröffentlichungstag der Anmeldung: **22.12.2021**
(21) Anmeldenummer: 20181037.1
(22) Anmeldetag: 19.06.2020
(51) Int. Cl.: E04D 1/04, E04D 1/16, C09D 4/06, C04B 41/48

(54) **BESCHICHTETER DACHSTEIN, BESCHICHTUNGSSYSTEM UND VERFAHREN ZUR BESCHICHTUNG EINES SOLCHEN DACHSTEINS**

(71) Anmelder: Coatib GmbH, 68219 Mannheim (DE)
(72) Erfinder: Schmidt, Gerhard, 68219 Mannheim (DE)
(74) Vertreter: Bird & Bird LLP

(57) **Zusammenfassung**

Dargestellt und beschrieben ist ein beschichteter Dachstein (1) umfassend einen Dachsteinkörper (3) mit einer Außenseite (7) und einer gegenüberliegenden Innenseite (9), ein Beschichtungssystem (5), welches auf der Außenseite (7) des Dachsteinkörpers (3) aufgebracht ist, wobei das Beschichtungssystem (5) eine erste Schicht (11) und eine zweite Schicht (13) aufweist, wobei die erste Schicht (11) auf der Außenseite (7) des Dachsteinkörpers (3) aufgebracht ist und die zweite Schicht (13) auf der ersten Schicht (11) aufgebracht ist, und wobei die zweite Schicht (13) eine Reinacrylatdispersionsfarbe aufweist. Die Aufgabe, einen beschichteten Dachstein bereitzustellen, bei dem Ausblühungen des Betons des Dachsteinkörpers weitestgehend verhindert werden, wird dadurch gelöst, dass die erste Schicht (11) eine Styrolacrylatdispersionsfarbe aufweist.

## Beschreibung

Die vorliegende Erfindung betrifft einen beschichteten Dachstein. Weitere Aspekte der Erfindung betreffen ein Beschichtungssystem zur Beschichtung eines solchen Dachsteins sowie ein Verfahren zur Herstellung eines solchen Dachsteins.

Der Dachstein umfasst einen Dachsteinkörper und ein Beschichtungssystem. Der Dachsteinkörper ist vorzugsweise aus Beton gebildet und weist eine Außenseite und eine gegenüberliegende Innenseite auf. Die Außenseite ist die Wetterseite, die vorgesehen ist, um zur Umgebung eines mit dem Dachstein eingedeckten Gebäudes gerichtet zu sein, und die Innenseite ist die Seite, die vorgesehen ist, zum Inneren des Gebäudes gerichtet zu sein. Das Beschichtungssystem ist mindestens auf der Außenseite des Dachsteinkörpers aufgebracht, so dass es die Außenseite des Dachsteinkörpers zumindest teilweise bedeckt und an dieser haftet. Das Beschichtungssystem kann zusätzlich auch auf der Innenseite aufgebracht sein, falls erforderlich. Das Beschichtungssystem weist eine erste Schicht, insbesondere Farbschicht, und eine zweite Schicht, insbesondere Farbschicht, auf. Die erste Schicht ist, vorzugsweise direkt, auf der Außenseite des Dachsteinkörpers, d.h. auf der sogenannten Nassseite, aufgebracht und die zweite Schicht ist, vorzugsweise direkt, auf der ersten Schicht, d.h. auf der sogenannten Trockenseite, aufgebracht, so dass die zweite Schicht die erste Schicht bedeckt, vorzugsweise vollständig bedeckt. Die zweite Schicht weist eine Reinacrylatdispersionsfarbe auf. Die Reinacrylatdispersionsfarbe umfasst eine Reinacrylatdispersion, die unterschiedliche Morphologie aufweisen kann, sowie Pigmente. Darüber hinaus kann die Reinacrylatdispersionsfarbe Füllstoffe und/oder diverse Additive zur Einstellung der Verarbeitungseigenschaften umfassen. Neben der Reinacrylatdispersionsfarbe kann die zweite Schicht noch weitere Bestandteile umfassen, kann jedoch auch alleine aus der Reinacrylatdispersionsfarbe bestehen.

Ähnliche beschichtete Dachsteine sind aus dem Stand der Technik bekannt. Beispielsweise sind Dachsteine aus dem Stand der Technik bekannt, die mit einer ersten Schicht Reinacrylatdispersionsfarbe auf der Nassseite und mit einer zweiten Schicht Reinacrylatdispersionsfarbe auf der Trockenseite beschichtet sind. Solche Beschichtungssysteme haben jedoch den Nachteil, dass sie normalerweise eine nicht ausreichend hohe Sperrwirkung haben, um ein Ausblühen des Betons des Dachsteinkörpers durch das Beschichtungssystem hindurch zuverlässig zu verhindern. Dies gilt insbesondere, wenn die Beschichtungssysteme hoch gefüllt werden, um eine ausgleichende Wirkung auf die Rauigkeit der Betonoberfläche zu haben, d.h. zur Porenabdeckung. Ein Ausblühen des Betons beeinträchtigt das optische Erscheinungsbild des Dachsteins und ist daher unerwünscht.

Somit ist es die Aufgabe der vorliegenden Erfindung, einen beschichteten Dachstein bereitzustellen, bei dem Ausblühungen des Betons des Dachsteinkörpers weitestgehend verhindert werden.

Diese Aufgabe wird dadurch gelöst, dass die erste Schicht eine Styrolacrylatdispersionsfarbe aufweist. Die Styrolacrylatdispersionsfarbe umfasst eine Styrolacrylatdispersion und Pigmente sowie vorzugsweise Füllstoffe, insbesondere Leicht-Füllstoffe, und/oder Additive. Neben der Styrolacrylatdispersionsfarbe kann die zweite Schicht vorzugsweise noch weitere Bestandteile umfassen, kann jedoch auch alleine aus der Styrolacrylatdispersionsfarbe bestehen. Die Styrolacrylatdispersionsfarbe weist eine hohe hydrophobe Wirkung bzw. eine geringe Wasserempfindlichkeit auf, insbesondere eine höhere hydrophobe Wirkung bzw. eine geringere Wasserempfindlichkeit als eine Reinacrylatdispersionsfarbe, so dass ein Beschichtungssystem mit einer ersten Schicht aus Styrolacrylatdispersionsfarbe eine hohe Sperrwirkung, insbesondere eine höhere Sperrwirkung als eine Reinacrylatdispersionsfarbe, erzielt und somit ein Ausblühen des Betons, insbesondere auch im Falle einer hohen Füllung, weitgehend verhindert. Gleichzeitig kann das äußere Erscheinungsbild des Dachsteins weiterhin durch die Reinacrylatdispersionsfarbe der zweiten Schicht geprägt werden. Insbesondere verleiht die Reinacrylatdispersionsfarbe der zweiten Schicht dem Dachstein ein langlebiges äußeres Erscheinungsbild und insbesondere gute UV-Beständigkeit.

In einer bevorzugten Ausführungsform weist die erste Schicht Füllstoffe geringer Dichte auf. Die Füllstoffe sind vorzugsweise aus einem Material geringer Dichte gebildet, insbesondere Kunststoffmaterial, wie beispielsweise Polypropylen, Polyethylen, oder silikatische Materialien, und können beispielsweise eine Hohlkugelform haben, um die Dichte bzw. das Gewicht der Füllstoffe weiter zu reduzieren. Die Dichte der Füllstoffe ist insbesondere geringer als die Dichte der Styrolacrylatdispersionsfarbe bzw. deren Bestandteile, insbesondere geringer als die Dichte deren Bestandteile aus Pigmenten und Standard-Füllstoffen mit einer Dichte von vorzugsweise zwischen 2100 kg/m³ und 4300 kg/m³ und vorzugsweise auch geringer als die Dichte der Füllstoffe mit Voll-Körper-Charakteristik mit einer Dichte von weniger als 2100 kg/m³. Mit solchen Füllstoffen geringer Dichte wird die kinetische Energie der Styrolacrylatdispersionsfarbe bei Aufspritzen der ersten Schicht verringert, wodurch ein Aufrauen der nassen Mörteloberfläche der Außenseite des Dachsteinkörpers verringert werden kann.

Dabei ist es besonders bevorzugt, wenn die Füllstoffe bzw. das Material der Füllstoffe in getrocknetem Zustand der ersten Schicht eine Dichte von zwischen 10 kg/m³ und 2700 kg/m³, vorzugsweise zwischen 20 kg/m³ und 1500 kg/m³, weiter bevorzugt zwischen 30 kg/m³ und 1000 kg/m³, meist bevorzugt zwischen 36 kg/m³ und 900 kg/m³ aufweisen. Mit solchen Füllstoffen kann ein Aufrauen der nassen Mörteloberfläche effektiv verringert werden.

In einer weiteren bevorzugten Ausführungsform weist die erste Schicht im getrockneten Zustand eine Pigment-Volumen-Konzentration von zwischen 35% und 85%, vorzugsweise zwischen 45% und 75%, weiter bevorzugt zwischen 50 % und 70 %, meist bevorzugt zwischen 55 % und 65 % auf. Auf diese Weise kann eine ausreichende Kohäsion innerhalb der ersten Schicht erreicht werden, die eine entsprechende Frostsicherheit für die Außenbewitterung gewährleistet.

In einer weiteren bevorzugten Ausführungsform weist die erste Schicht im getrockneten Zustand eine Schichtdicke bzw. Schichtstärke von zwischen 45 µm und 95 µm oder zwischen 70 g/m² und 110 g/m², vorzugsweise zwischen 55 µm und 85 µm oder zwischen 80 g/m² und 100 g/m², meist bevorzugt zwischen 65 µm und 75 µm oder zwischen 85 g/m² und 97 g/m², auf. Auf diese Weise können die Oberfläche des Dachsteins ausreichend abgedeckt und die Poren nivellierend gefüllt werden.

In einer weiteren bevorzugten Ausführungsform umfasst die erste Schicht Antiausblühadditive, wie beispielsweise Silane, die eine Porenhydrophobierung bewirken, oder Phosphate bzw. Polyphosphate zur Komplexierung von freien Zement-Ionen. Auf diese Weise kann ein Ausblühend des Betons des Dachsteinkörpers noch effektiver verhindert werden.

In einer weiteren bevorzugten Ausführungsform ist die erste Schicht als Nassbeschichtung auf den nassen, unausgehärteten, d.h. zumindest noch nicht vollständig ausgehärteten, Dachsteinkörper aufgebracht. Die zweite Schicht ist dann vorzugsweise auf die ausgehärtete erste Schicht auf dem ausgehärteten Dachsteinkörper aufgebracht. Auf diese Weise wird eine gute Verankerung oder Haftung des Beschichtungssystems an dem Dachsteinkörper gewährleistet.

In einer weiteren bevorzugten Ausführungsform ist die zweite Schicht silanisiert. Das heißt, die äußere Oberfläche der zweiten Schicht ist mit einer Silanverbindung versehen bzw. beschichtet. Die Silanisierung verringert die Hafteigenschaften der äußeren Oberfläche der zweiten Schicht und verleiht dieser einen hydrophoben Charakter, so dass ein Anhaften von Schmutz an der äußeren Oberfläche der zweiten Schicht verringert wird. Außerdem verringert die Silanisierung ein Ausblühen des Betons des Dachsteinkörpers.

In einer weiteren bevorzugten Ausführungsform weist die zweite Schicht eine Coreshell-Struktur, insbesondere eine Coreshell-Nanostruktur auf. Die Coreshell-Struktur umfasst mindestens zwei verschiedene Acrylatmaterialien, beispielsweise Kerne aus einem ersten Acrylatmaterial umhüllt von Hüllen aus einem zweiten Acrylatmaterial. Das erste und das zweite Acrylatmaterial haben unterschiedliche Eigenschaften, sind insbesondere unterschiedlich hart bzw. weich und sorgen somit dafür, dass sich der Erweichungspunkt bzw. die Glasübergangstemperatur und somit die thermische Elastizität durch geeignete Gewichtung und ggf. auch Form der ersten und zweiten Acrylatmaterialien auf ein gewünschtes Maß einstellen lässt. Insbesondere kann dabei der harte Acrylatanteil für eine erhöhte Glasübergangstemperatur und somit für eine geringere thermische Elastizität sorgen, was vorteilhaft ist, da die Endhärte der zweiten Schicht sowie die Schmutzanhaftung an dieser reduziert werden können. Außerdem kann eine erhebliche Reduzierung der Lösemittelmenge in der zweiten Schicht, insbesondere von ca. 50%, erreicht werden, da ein Teil der Verfilmung durch das weiche Acrylatmaterial der Coreshell-Struktur gewährleistet wird.

In einer weiteren bevorzugten Ausführungsform weist die zweite Schicht im getrockneten Zustand eine Pigment-Volumen-Konzentration von zwischen 1 % und 40 %, vorzugsweise zwischen 2 % und 35 %, meist bevorzugt zwischen 3 % und 30 % auf. Wenn die zweite Schicht als Hochglanzschicht gebildet ist, weist diese vorzugsweise eine Pigment-Volumen-Konzentration von 5 % bis 7 % auf. Ist die zweite Schicht als Semiglanzschicht gebildet, weist diese vorzugsweise eine Pigment-Volumen-Konzentration von 30 % auf. Auf diese Weise kann eine gute UV-Beständigkeit gewährleistet werden und verschiedene Glanzgrade der Oberfläche können eingestellt werden.

In einer weiteren bevorzugten Ausführungsform weist die zweite Schicht im getrockneten Zustand eine Schichtdicke bzw. Schichtstärke von zwischen 20 µm und 55 µm oder zwischen 20 g/m² und 100 g/m², vorzugsweise zwischen 25 µm und 50 µm oder zwischen 35 g/m² und 70 g/m², meist bevorzugt zwischen 30 µm und 48 µm oder zwischen 42 g/m² und 63 g/m², auf. Auf diese Weise kann eine homogene und farbmetrisch deckende Oberfläche erzeugt werden.

In einer weiteren bevorzugten Ausführungsform ist die erste Schicht und/oder die zweite Schicht aufgespritzt. Auf diese Weise kann ein effizienter und gleichmäßiger Schichtauftrag erfolgen.

Ein weiterer Aspekt der vorliegenden Erfindung betrifft ein Beschichtungssystem zur Beschichtung eines Dachsteins nach einer der zuvor beschriebenen Ausführungsformen. Das Beschichtungssystem umfasst eine erste Schicht und eine zweite Schicht. Die erste Schicht weist eine Styrolacrylatdispersionsfarbe auf und die zweite Schicht weist eine Reinacrylatdispersionsfarbe auf. Die erste Schicht ist ausgebildet, um, vorzugsweise direkt, auf der Außenseite des Dachsteinkörpers, d.h. auf der Nassseite, aufgebracht zu werden, und die zweite Schicht ausgebildet ist, um, vorzugsweise direkt, auf der ersten Schicht, d.h. auf der Trockenseite, aufgebracht zu werden und diese vorzugsweise vollständig zu bedecken. Die im Zusammenhang mit dem Dachstein erläuterten Merkmale und Wirkungen sind vis-a-vis anwendbar und bevorzugt ebenso im Zusammenhang mit dem Beschichtungssystem.

Ein weiterer Aspekt der vorliegenden Erfindung betrifft ein Verfahren zur Herstellung eines beschichteten Dachteins nach einer der zuvor beschriebenen Ausführungsformen. Bei dem Verfahren wird ein Dachsteinkörper, vorzugsweise aus Beton, mit einer Außenseite und einer gegenüberliegenden Innenseite bereitgestellt. Auf die Außenseite des Dachsteinkörpers wird ein Beschichtungssystem aufgebracht, so dass dieses die Außenseite des Dachsteinkörpers zumindest teilweise bedeckt und an dieser haftet. Das Beschichtungssystem weist eine erste Schicht aus Styrolacrylatdispersionsfarbe und eine zweite Schicht aus Reinacrylatdispersionsfarbe auf. Die im Zusammenhang mit dem Dachstein erläuterten Merkmale und Wirkungen sind vis-a-vis anwendbar und bevorzugt ebenso im Zusammenhang mit dem Verfahren.

In einer bevorzugten Ausführungsform wird die erste Schicht vorzugsweise direkt, auf die Außenseite des unausgehärteten bzw. noch nicht vollständig ausgehärteten Dachsteinkörpers, d.h. auf der Nassseite, aufgebracht, insbesondere aufgespritzt. Anschließend wird der Dachsteinkörper mit der ersten Schicht in einer Aushärtekammer ausgehärtet. Anschließend wird die zweite Schicht, vorzugsweise direkt, auf die ausgehärtete erste Schicht, d.h. auf die Trockenseite, aufgebracht, insbesondere aufgespritzt, so dass die zweite Schicht die erste Schicht vorzugsweise vollständig bedeckt. Vorzugsweise wird der mit der ersten und zweiten Schicht beschichtete Dachsteinkörper anschließend in einer Trocknungskammer getrocknet. Auf diese Weise wird eine ausreichende Filmbildung sichergestellt.

Ein Ausführungsbeispiel der vorliegenden Erfindung wird im Folgenden anhand einer Zeichnung näher erläutert. Die Zeichnung zeigt in
- Fig. 1: eine schematische Querschnittsansicht eines erfindungsgemäßen beschichteten Dachsteins und
- Fig. 2: eine schematische Ansicht einer Fertigungsstrecke zur Herstellung des Dachsteins aus Fig. 1.

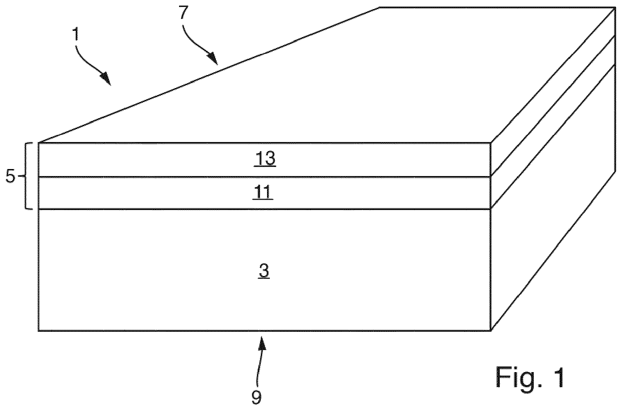

In Fig. 1 ist ein beschichteter Dachstein 1 gemäß eines Ausführungsbeispiel der vorliegenden Erfindung dargestellt. Der Dachstein 1 umfasst einen Dachsteinkörper 3 und ein Beschichtungssystem 5. Der Dachsteinkörper 3 ist aus Beton gebildet und weist eine Außenseite 7 und eine gegenüberliegende Innenseite 9 auf. Das Beschichtungssystem 5 ist auf der Außenseite 7 des Dachsteinkörpers 3 aufgebracht, so dass es die Außenseite 7 des Dachsteinkörpers 3 vollständig bedeckt und an dieser haftet. Das Beschichtungssystem 5 weist eine erste Schicht 11 und eine zweite Schicht 13 auf. Die erste Schicht 11 ist auf der Außenseite 7 des Dachsteinkörpers 3, der Nassseite, aufgebracht und die zweite Schicht 13 ist auf der ersten Schicht 11, der Trockenseite, aufgebracht, so dass die zweite Schicht 13 die erste Schicht 11 vollständig bedeckt.

Die erste Schicht 11 weist eine Styrolacrylatdispersionsfarbe aus einer Styrolacrylatdispersion und Pigmenten sowie Standard-Füllstoffen mit einer Dichte von zwischen 2100 kg/m³ und 4300 kg/m³ auf. Ferner weist die erste Schicht 11 Füllstoffe in Form von Hohlkörpern geringer Dichte auf. Die Dichte der Füllstoffe ist in dem vorliegenden Ausführungsbeispiel geringer als die Dichte der Styrolacrylatdispersionsfarbe bzw. deren Bestandteile, vorzugsweis geringer als die Dichte von Füllstoffen mit Voll-Körper-Charakteristik, d.h. geringer als 2100 kg/m³, und liegt in getrocknetem Zustand der ersten Schicht 11 zwischen 36 kg/m³ und 900 kg/m³. Außerdem weist die erste Schicht 11 im getrockneten Zustand eine Pigment-Volumen-Konzentration von zwischen 55 % und 65 % und eine Schichtdicke von zwischen 65 µm und 75 µm bzw. zwischen 85 g/m² und 97 g/m² auf. Die erste Schicht 11 enthält darüber hinaus Antiausblühadditive in Form von Silanen oder Ionenfängern.

Die zweite Schicht 13 weist eine silanisierte Reinacrylatdispersionsfarbe aus einer Reinacrylatdispersion sowie Pigmenten, Füllstoffen und diversen Additiven zur Einstellung der Verarbeitungseigenschaften auf. Außerdem weist die zweite Schicht 13 eine Coreshell-Nanostruktur auf, die weiche Materialien und harte Materialien umfasst. Ferner weist die zweite Schicht 13 im getrockneten Zustand eine Pigment-Volumen-Konzentration von zwischen 5 % und 30 % und eine Schichtdicke von zwischen 30 µm und 48 µm bzw. zwischen 42 g/m² und 63 g/m² auf. Im vorliegenden Ausführungsbeispiel ist die zweite Schicht 13 als Hochglanzschicht gebildet, die eine Pigment-Volumen-Konzentration von 5 % und eine Schichtdicke von zwischen 34 µm und 48 µm bzw. zwischen 42 g/m² und 59 g/m² aufweist. Die zweite Schicht 13 kann jedoch auch als Semiglanzschicht gebildet sein, die dann eine Pigment-Volumen-Konzentration von 30 % und eine Schichtdicke von zwischen 30 µm und 43 µm bzw. zwischen 44 g/m² und 63 g/m² aufweist.

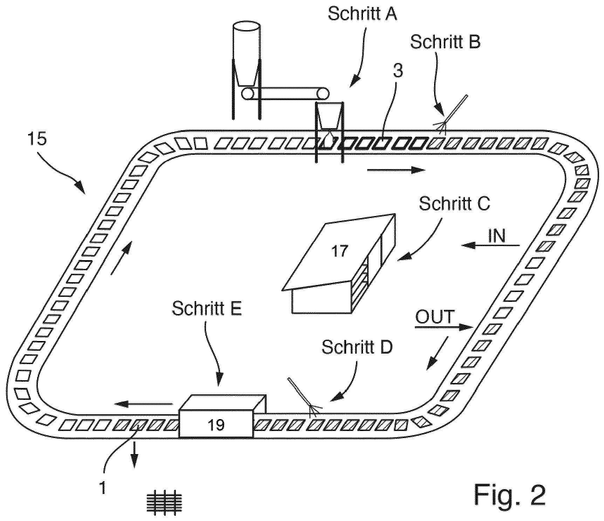

In Fig. 2 ist eine Fertigungsstrecke 15 zur Herstellung des Dachsteins 1 aus Fig. 1 mit einem Verfahren gemäß eines Ausführungsbeispiels der vorliegenden Erfindung dargestellt. Bei dem Verfahren wird zunächst der Dachsteinkörper 3 aus Beton in eine geeignete Form gegossen (Schritt A). Anschließend wird der unausgehärtete, nasse Dachsteinkörper 3 auf seiner Außenseite 7 durch Aufspritzen der ersten Schicht 11 beschichtet, so dass dieses die Außenseite 7 des Dachsteinkörpers 3 vollständig bedeckt und an dieser haftet (Schritt B). Danach werden der Dachsteinkörper 3 und die an dessen Außenseite 7 angebrachte erste Schicht 11 in einer Aushärtekammer 17 abhängig von der verwendeten Zementsorte beispielsweise für 6 bis 8 Stunden bei 30° bis 55°C ausgehärtet (Schritt C). Als nächstes wird die zweite Schicht 13 auf die ausgehärtete erste Schicht 11 des ausgehärteten Dachsteinkörpers 3 durch Aufspritzen aufgebracht, so dass die zweite Schicht 13 die erste Schicht 11 vollständig bedeckt (Schritt D). Schließlich wird der mit der ersten 11 und zweiten Schicht 13 beschichtete Dachsteinkörper 3 in einer Trocknungskammer 19 getrocknet (Schritt E).

Mit der vorliegenden Erfindung kann ein Ausblühen des Betons des Dachsteinkörpers wirksam verhindert werden. Gleichzeitig wird das äußere Erscheinungsbild des Dachsteins nicht beeinträchtigt.

## Patentansprüche

1. Beschichteter Dachstein (1) umfassend
einen Dachsteinkörper (3) mit einer Außenseite (7) und einer gegenüberliegenden Innenseite (9),
ein Beschichtungssystem (5), welches auf der Außenseite (7) des Dachsteinkörpers (3) aufgebracht ist,
wobei das Beschichtungssystem (5) eine erste Schicht (11) und eine zweite Schicht (13) aufweist,
wobei die erste Schicht (11) auf der Außenseite (7) des Dachsteinkörpers (3) aufgebracht ist und die zweite Schicht (13) auf der ersten Schicht (11) aufgebracht ist, und
wobei die zweite Schicht (13) eine Reinacrylatdispersionsfarbe aufweist,
**dadurch gekennzeichnet, dass**
die erste Schicht (11) eine Styrolacrylatdispersionsfarbe aufweist.

2. Dachstein (1) nach Anspruch 1, wobei die erste Schicht (11) Füllstoffe geringer Dichte aufweist.

3. Dachstein (1) nach Anspruch 2, wobei die Füllstoffe eine Dichte von zwischen 20 kg/m³ und 1500 kg/m³, vorzugsweise zwischen 30 kg/m³ und 1000 kg/m³, meist bevorzugt zwischen 36 kg/m³ und 900 kg/m³ aufweisen.

4. Dachstein (1) nach einem der Ansprüche 1 bis 3, wobei die erste Schicht (11) eine Pigment-Volumen-Konzentration von zwischen 35% und 85%, vorzugsweise zwischen 45% und 75%, weiter bevorzugt zwischen 50 % und 70 %, meist bevorzugt zwischen 55 % und 65 % aufweist.

5. Dachstein (1) nach einem der Ansprüche 1 bis 4, wobei die erste Schicht (11) eine Schichtdicke von zwischen 45 µm und 95 µm oder zwischen 70 und 110 g/m², vorzugsweise zwischen 55 µm und 85 µm oder zwischen 80 und 100 g/m², meist bevorzugt zwischen 65 µm und 75 µm oder zwischen 85 und 97 g/m², aufweist.

6. Dachstein (1) nach einem der Ansprüche 1 bis 5, wobei die erste Schicht (11) Antiausblühadditive umfasst.

7. Dachstein (1) nach einem der Ansprüche 1 bis 6, wobei die erste Schicht (11) auf den unausgehärteten Dachsteinkörper (3) aufgebracht ist.

8. Dachstein (1) nach einem der Ansprüche 1 bis 7, wobei die zweite Schicht (13) silanisiert ist.

9. Dachstein (1) nach einem der Ansprüche 1 bis 8, wobei die zweite Schicht (13) eine Coreshell-Morphologie aufweist.

10. Dachstein (1) nach einem der Ansprüche 1 bis 9, wobei die zweite Schicht (13) eine Pigment-Volumen-Konzentration von zwischen 1 % und 40 %, vorzugsweise zwischen 2 % und 35 %, meist bevorzugt zwischen 3 % und 30 % aufweist.

11. Dachstein (1) nach einem der Ansprüche 1 bis 10, wobei die zweite Schicht (13) eine Schichtdicke von zwischen 20 µm und 55 µm oder zwischen 20 und 100 g/m², vorzugsweise zwischen 25 µm und 50 µm oder zwischen 35 und 70 g/m², meist bevorzugt zwischen 30 µm und 48 µm oder zwischen 42 und 63 g/m², aufweist.

12. Dachstein (1) nach einem der Ansprüche 1 bis 11, wobei die erste Schicht (11) und/oder die zweite Schicht (13) aufgespritzt ist.

13. Beschichtungssystem (5) zur Beschichtung eines Dachsteins (1) nach einem der Ansprüche 1 bis 12, umfassend
eine erste Schicht (11), die eine Styrolacrylatdispersionsfarbe aufweist und
eine zweite Schicht (13), die eine Reinacrylatdispersionsfarbe aufweist,
wobei die erste Schicht (11) ausgebildet ist, um auf der Außenseite (7) des Dachsteinkörpers (3) aufgebracht zu werden, und die zweite Schicht (13) ausgebildet ist, um auf der ersten Schicht (11) aufgebracht zu werden.

14. Verfahren zur Herstellung eines Dachteins (1) nach einem der Ansprüche 1 bis 12 mit den folgenden Schritten:
- Bereitstellen eines Dachsteinkörpers (3) mit einer Außenseite (7) und einer gegenüberliegenden Innenseite (9),
- Aufbringen eines Beschichtungssystems (5) auf der Außenseite (7) des Dachsteinkörpers (3), wobei das Beschichtungssystem (5) eine erste Schicht aus Styrolacrylatdispersionsfarbe und eine zweite Schicht aus Reinacrylatdispersionsfarbe aufweist.

15. Verfahren nach Anspruch 14, wobei die erste Schicht (11) auf der Außenseite (7) des Dachsteinkörpers (3) aufgebracht wird und die zweite Schicht (13) auf die erste Schicht (11) aufgebracht wird.
